# EUROPEAN PATENT SPECIFICATION

(11) **EP 4 350 167 B1**
(45) Date of publication and mention of the grant of the patent: **26.11.2025**
(21) Application number: 21734878.8
(22) Date of filing: 25.05.2021
(51) Int. Cl.: F16F 9/346, F16F 9/48, F16F 9/02

(54) **GAS STAMPING CYLINDER**
GASPRÄGEZYLINDER
CYLINDRE D'ESTAMPAGE À GAZ

(43) Date of publication of application: 10.04.2024
(73) Proprietor: Bikkean Global Services S.L.U., 01160 Aramaio (ES)
(72) Inventor: DEL TESO DIEZ, Luis, 01160 ARAMAIO (ES)
(74) Representative: Galbaian S.Coop.
(86) International application number: PCT/ES2021/070372
(87) International publication number: WO 2022/248743

(56) References cited:
- EP-A1- 2 634 451
- EP-A1- 2 980 438
- DE-A1- 10 024 499

## Description

### TECHNICAL FIELD

The present invention relates to gas stamping cylinders which require high forces.

### PRIOR ART

The use of gas cylinders is widely known for different applications. For example, their use in vehicle doors for supporting the weight of said doors or for lifting them is known. Cylinders of this type of require withstanding small forces, so they are generally simple.

In applications of another type, such as in mechanical stamping presses, for example, cylinders are required to withstand high forces. When a die of the press is lowered, the cylinder dampens this movement (at least the end of this movement). The high force is due primarily to the weight of the dies and to their movement (speed). Cylinders of this type are stamping cylinders (due to the high forces they require) and are more complex than those mentioned in the preceding paragraph, and although their general basic concept may be similar (a piston that is moveable and compresses or decompresses a chamber with its movement), they are constructively very different and have very little in common with the aforementioned cylinders.

Originally, a stamping damper comprised a spring which was compressed by the action of the press, and when the die returned to its initial position, it was decompressed. The greater the force that the press had to exert was, the larger the dimensions of the spring were. This implied a limitation in the maximum force of presses, given that, among other things, they required large spaces and could furthermore be expensive.

To avoid this limitation, gas stamping cylinders by way of dampers started to be used. These stamping cylinders comprise a moveable piston, a first chamber with a compressible gas, and a second chamber. The second chamber can comprise nil volume in the piston rest position which increases as said piston descends. Both chambers were cut off from one another, and gas could not be evacuated from the first chamber to the second chamber. Stamping cylinders of this type are commonly known as single-chamber gas stamping cylinders. The use of gas stamping cylinders allowed the force of the press compared with the spring to be increased, given that for one and the same force as the force allowed by a spring, a gas stamping cylinder requires smaller dimensions.

However, in gas stamping cylinders of this type (single-chamber gas stamping cylinders), as the piston descends, the pressure of the gas in the first chamber of said cylinder increases. This pressure is the force which the cylinder exerts against the movement of the die. The strength or force that these stamping cylinders (the piston) have therefore depends on the diameter of the base of the piston, which is what presses on the gas present in the first chamber. The piston also comprises a rod having a specific diameter which is pushed by the lower die (directly or indirectly, in which case the part to be stamped would be located between both).

As the die continues to descend, the piston continues to descend, pushed by the die, and the pressure in the first chamber increases, which implies a risk if the stamping cylinder fails for any reason or if the gas exceeds a maximum safety pressure for which this cylinder was designed. Furthermore, once the die starts to retreat, the piston is also pushed upwards by the pressure present in the first chamber, and this pressure causes the upward force of the piston to be high (since, as occurs in the downward movement of the piston, it depends on the surface of the base facing the first chamber), and it causes the piston to move upwards together with the upper die. Therefore, in addition to having a high pressure in the first chamber during the downward movement, stamping cylinders of this type cannot be used satisfactorily in some stamping applications, given that due to this high upward force, they could affect the recently stamped part.

Gas stamping cylinders where there are two chambers that are not cut off from one another as such can be found, as in the case of the stamping cylinder disclosed in US5823513A, for example. In this case, both the downward force and the upward force depend on the diameter of the rod of the piston, with the aforementioned risk being avoided. However, since the downward force that cylinders with two communicated chambers have is not high, these cylinders are not suitable for some applications either.

Other cylinders try to overcome both drawbacks. In cylinders of this type, the high force both in the downward movement and in the upward movement of the piston is maintained, but said upward movement is delayed. Therefore, when the piston starts to move upwards, there is time for the part to be evacuated from the position where it could be affected by the piston, for example, such that although a high upward force is maintained, said force does not affect said part.

Gas stamping cylinders with solutions delaying the upward movement of the piston are also described in EP2735759A1, EP1186795A2, and EP1074759A2, for example. In these gas stamping cylinders, when the upper die starts to retreat, the first both chambers are communicated through a path having a limited diameter. This limitation causes the transfer of gas from the second chamber to the first chamber to be slow, such that the piston moves upwards with a speed lower than the descending speed. The upward force of the piston is thereby delayed or slowed.

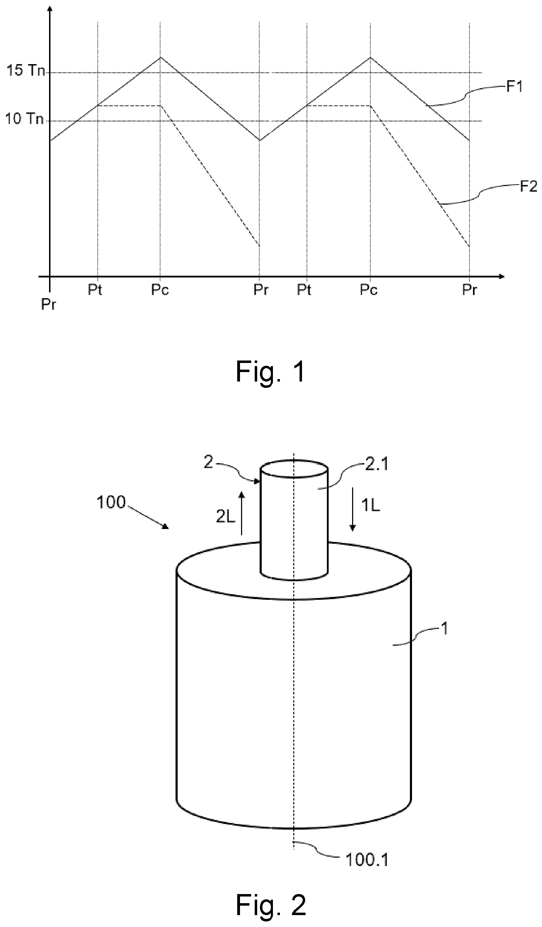

The gas stamping cylinder has to exert a specific force against the movement of the upper die during the descent of said upper die, so cylinders of this type have the drawback that the final force exerted by the cylinder by far exceeds the specific force, given that the pressure in the first chamber increases as the piston descends. Figure 1 shows a development F1 of the force exerted by the cylinder in these cases (without considering a delay) from the piston rest position Pr to the compression position Pc, and from said compression position Pc to said rest position Pr, for a cylinder for which a specific force of 10 tons (10 Tn) is required.

As can be seen in Figure 1, the cylinder exerts from the start (rest position Pr) a force close to the specific force (potentially the same), and this force F1 continues to increase until the piston reaches the compression position Pc. The piston then retreats to its rest position Pr, with the force dropping to the initial value.

WO2020128133A1, belonging to the same applicant, discloses a gas stamping cylinder configured for also overcoming this drawback. The cylinder disclosed in this document comprises a central axis, a main body defining an inner cavity, and a piston suitable for moving between a rest position and a compression position. The piston comprises a base and a main rod extending from the base. There is delimited in the inner cavity of the main body a first chamber below the base and a second chamber above said base. The cylinder comprises a release path for communicating the two chambers, and a release device blocking said path in a blocking position and configured for coming out of said position when the pressure in the first chamber is equal to or greater than a predetermined threshold value. Therefore, when the force of the cylinder reaches the predetermined threshold (piston position Pt), gas is released from the first chamber to the second chamber, impeding the force exerted by said cylinder from exceeding said value. To that end, the release device comprises a spring housed in the piston and in the release path, which is tared based on the specific force required in each case. Figure 1 also depicts the development of the force F2 exerted by said cylinder for the same case as the one described above, such that both forces F1 and F2 can be compared. Furthermore, it should be indicated that at least by having a lower maximum force, the dimensions of the cylinder are also smaller.

DE10024499A1 discloses a gas compression in which the force flow is controlled through a control element mounted in the cylinder, so that when the piston is moved from a position on the lid towards the base, a connection is produced between a lower chamber and an upper chamber and the force flow is reduced or kept constant or the connection between the two chambers is interrupted and the force flow is then increased.

EP2634451A1 discloses a gas cylinder actuator with overtravel safety device, comprising a tubular jacket for gas containment, which is closed hermetically at one end by a bottom provided with a gas filling valve and at the opposite end by a head portion, which is provided with a hole for the passage of a stem with a piston The jacket, the bottom and the piston form the gas expansion and compression chamber.

EP2980438A1 discloses a gas-operated spring with overtravel safety device, comprising a tubular containment jacket, an end face, an opposite annular portion for closing the tubular jacket and for the passage of a piston rod, and a piston rod arranged so as to pass through the annular portion. A chamber for pressurized gas is defined between the tubular jacket, the end face, the annular portion and the piston rod.

### DISCLOSURE OF THE INVENTION

The object of the invention is to provide a gas stamping cylinder, as defined in the claims.

The gas stamping cylinder of the invention is configured for being used in stamping presses and comprises a central axis, a main body defining a cylindrical inner cavity, and a piston suitable for moving in the inner cavity in a first longitudinal direction and a second longitudinal direction opposite the first longitudinal direction, between a rest position and a compression position. The piston comprises a base and a main rod extending axially from the base, and said main rod comprises an end protruding from the main body at least with the piston in the rest position.

There is delimited in the inner cavity of the main body a gas chamber below the base of the piston and an additional chamber above the base, and the cylinder comprises a gaseous fluid at least in the gas chamber.

The piston comprises at least one contact zone configured for sliding over a contact surface of the cylinder during its movement, and a closure element arranged in said contact zone and configured for impeding the passage of gaseous fluid from the gas chamber between said contact zone of the piston and said contact surface.

The contact surface comprises at least one recess downstream of the piston, with said piston in the rest position, such that when the contact zone of the piston coincides during its movement with said recess, gaseous fluid present in the gas chamber is evacuated from said gas chamber through said recess. In this position, the closure element stops cooperating with the contact surface in the recess position, such that a path for the passage of gas between said contact zone of the piston and said contact surface (through the recess) opens up.

As the piston descends, the gaseous fluid present in the gas chamber is compacted, increasing its pressure. With the proposed stamping cylinder, as a result of the recess, during said movement of the piston there is at least one moment in which a path is enabled for the gaseous fluid to be evacuated from the gas chamber, with part of the pressure present in said gas chamber in that moment thus being released, and the maximum value which the pressure of said gaseous fluid may reach thus being limited. This allows a required or desired maximum value to be pre-set, and by suitably adjusting the position of the recess, it is possible that said stamping cylinder will exceed said maximum value.

Therefore, with the proposed gas stamping cylinder it is ensured that said stamping cylinder has the required force while at the same time preventing said force from exceeding, at least in excess, the required force during the movement of said piston. Furthermore, it is achieved in a simple and easy-to-manufacture manner without needing to use elements that may complicate the assembly and/or manufacture of the design.

The recess does not span the entire perimeter of the main body around the central axis of the cylinder.

These and other advantages and features of the invention will become apparent in view of the figures and the detailed description of the invention.

### DESCRIPTION OF THE DRAWINGS

Figure 1 shows an example of the development of a force exerted by two cylinders from the state of the art during the movement of the piston.
Figure 2 shows a perspective view of an embodiment of the gas stamping cylinder of the invention.
Figure 3 shows a section view of an embodiment of the gas stamping cylinder of the invention, with the piston in a rest position.
Figure 4 shows a section view of the cylinder of Figure 2, with the piston in a compression position.
Figure 5 shows a section view of the cylinder of Figure 2, with a contact zone of the piston coinciding with a recess of a contact surface of said cylinder.
Figure 6 is a plan view of section VI-VI of a main body of the cylinder of Figure 2.
Figure 7 shows a section view of another embodiment of the gas stamping cylinder not according to the invention, with a recess spanning the entire perimeter around a central axis of the cylinder.
Figure 8 shows a section view of another embodiment of the gas stamping cylinder not according to the invention, with a plurality of recesses distributed axially and with each recess spanning the entire perimeter around a central axis of the cylinder.
Figure 9 shows a section view of another embodiment of the gas stamping cylinder of the invention, with the piston comprising two contact zones and with the contact zone arranged in the lowest position coinciding with a recess of the contact surface of said cylinder.
Figure 10 shows a section view of the cylinder of Figure 9, with the piston in a position in which neither of the two contact zones coincides with a recess.
Figure 11 shows a section view of the cylinder of Figure 9, with the piston in a position in which the contact zone arranged in a higher position coincides with a recess.
Figure 12 shows a section view of another embodiment of the gas stamping cylinder of the invention, with the piston comprising two contact zones and with the piston in the rest position.
Figure 13 shows a section view of another embodiment of the gas stamping cylinder of the invention, with the piston in a rest position.
Figure 14 shows a section view of the cylinder of Figure 13, with the piston in a compression position.
Figure 15 shows an example of the development of the force exerted by an embodiment of the cylinder of the invention, during the movement of the piston.

### DETAILED DISCLOSURE OF THE INVENTION

The cylinder 100 of the invention is a gas stamping cylinder, which implies that it is configured for the stamping applications where the cylinder is required to offer high forces, such as in stamping presses. The cylinder 100 can thus be configured for stamping presses. Figure 2 shows an embodiment of the cylinder 100.

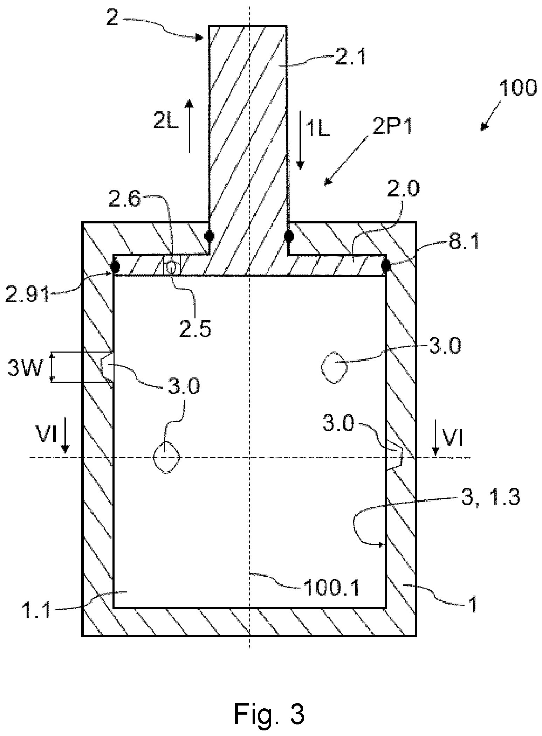

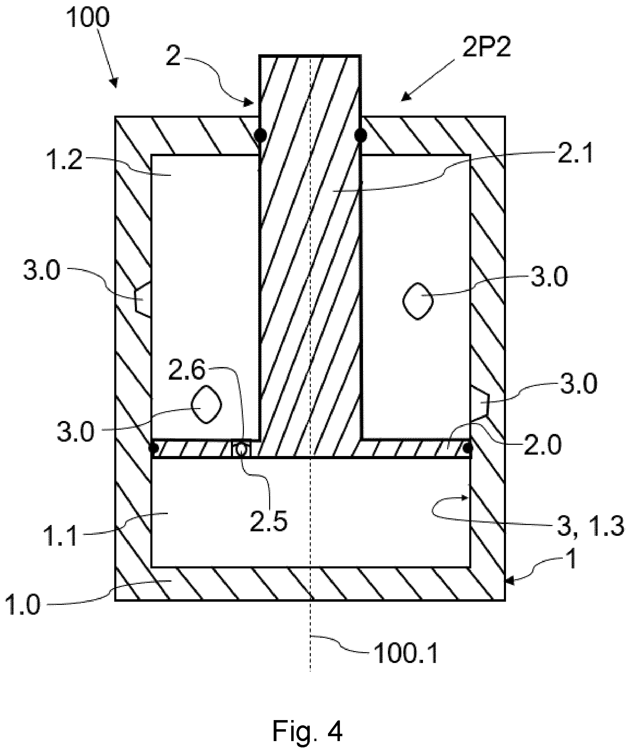

In any of its embodiments, the cylinder 100 comprises a central axis 100.1, a main body 1 defining a cylindrical inner cavity delimited by an inner surface 1.3, and a piston 2 suitable for moving in the inner cavity between a rest position 2P1 (see Figure 3) and a compression position 2P2 (see Figure 4). To move towards the compression position 2P2, the piston 2 moves in a first longitudinal direction 1L (the piston 2 descends), whereas for moving to the rest position 2P1, said piston 2 moves in a second longitudinal direction 2L opposite the first longitudinal direction 1L (the piston rises or moves upwards). Both longitudinal directions 1L and 2L are linear directions.

The piston 2 comprises a base 2.0 and a main rod 2.1 extending axially from the base 2.0. The main rod 2.1 has an end protruding from the main body 1 of the cylinder 100 at least with the piston 2 in the rest position 2P1, at a part of said main body 1 opposite a lower base 1.0 of said main body 1. The main rod 2.1 is thus actuated on said end protruding by an actuation element not depicted in the figures (an upper die of a press for example) in order to move it to the compression position 2P2, and said cylinder 100 offers a force opposing said movement.

In any of the embodiments, the cylinder 100 comprises, in the cylindrical inner cavity defined in the main body 1 and below the base 2.0 of the piston 2, a gas chamber 1.1 with a gaseous fluid therein. In said cavity, the cylinder 100 further comprises an additional chamber 1.2 above said base 2.0, which can comprise nil volume with the piston 2 in the rest position 2P1 (see example of Figure 3), but the volume of which increases as the piston descends to its compression position 2P2.

The piston 2 comprises at least one contact zone 2.91, preferably at the base 2.0, configured for sliding over a contact surface 3 of the cylinder 100 during its movement, and the cylinder 100 comprises a closure element 8.1 arranged in said contact zone 2.91 and configured for cooperating with the contact surface 3 and impeding, with said cooperation, the passage of gaseous fluid of the gas chamber 1.1 between said contact zone 2.91 of the piston 2 and said contact surface 3. As the piston 2 descends to the compression position 2P2, the volume of the gas chamber 1.1 thereby decreases and the gaseous fluid present in said gas chamber 1.1 is compressed, the force exerted by the cylinder 100 against said movement being increased. The gas chamber 1.1 is delimited by the base 2.0 of the piston 2 and the part of the inner surface 1.3 of said main body 1 below the base 2.0, so said cooperation impedes this evacuation of gas. The closure element 8.1 can be an O-ring.

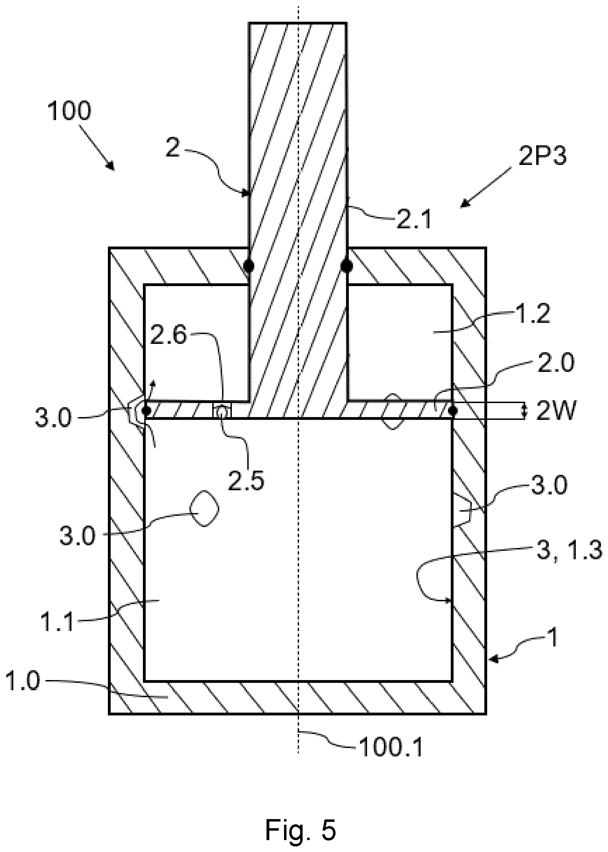

The contact surface 3 comprises at least one recess 3.0 below the piston 2, with said piston 2 in the rest position 2P1, said recess 3.0 comprising a specific axial length 3W, axial being understood to mean a length extending in a direction parallel to the central axis 100.1 of the cylinder 100. Therefore, when the contact zone 2.91 of the piston 2 at least partially coincides with said recess 3.0 (position 2P3), and at least during the movement of said piston 2 in the first longitudinal direction 1L, the closure element 8.1 stops cooperating with the contact surface 3 and a space is opened between said contact zone 2.91 and said contact surface 3 through which gaseous fluid present in the gas chamber 1.1 is evacuated from said gas chamber 1.1. This implies a release in gas pressure (see arrow in Figure 5, for example), which interrupts or slows down the increase in pressure of said gaseous fluid (and could even cause said pressure to drop), and therefore limits the maximum force offered by the cylinder 100 against the movement of the piston 2 in the first longitudinal direction 1L. The position of the recess 3.0 will be selected based on the force requirements of the manufacturer of the cylinder 100 and/or of the end customer of said cylinder 100, i.e., it will be placed closer to or farther away from the piston 2, with said piston 2 in the rest position 2P1, based on said requirements (which may include, for example, the desired force for the cylinder 100 and/or the desired stroke for the piston 2).

While the gas present in the gas chamber 1.1 is evacuated in the cylinder 100 the pressures in the gas chamber 1.1 and in the additional chamber 1.2 tend to be equal, which may imply a decrease in the force exerted by the cylinder 100. However, as the piston 2 continues its stroke and at a specific speed, said passage of gas is enabled is for a very limited time, and in practice this decrease in force is negligible.

In the context of the invention, when the contact zone 2.91 of the piston 2 is said to coincide with the recess 3.0, this must be interpreted to mean a coincidence transverse to the central axis 100.1 of the cylinder 100, i.e., when it coincides in a plan which is transverse to said central axis 100.1.

The axial length 3W of the recess 3.0 is greater than an axial length 2W of the contact zone 2.91 of the piston 2. This ensures that the contact zone 2.91 and/or the closure element 8.1 does not completely cover the recess 3.0 in some position of the piston 2, ensuring that with the piston 2 in said position, a passage for the gaseous fluid present in the gas chamber 1.1 (passage between the contact zone 2.9 and the contact surface 3, as a result of the recess 3.0) is enabled.

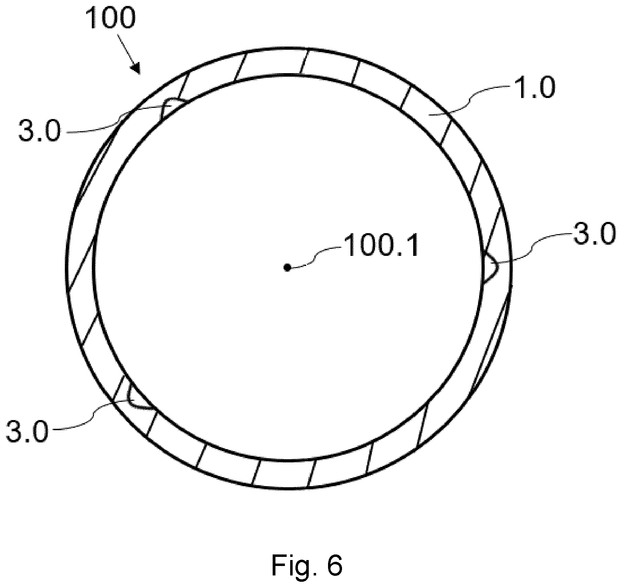

The recess 3.0 does not span the entire perimeter around the central axis 100.1. Then, the base 2.0 is always allowed to have some part resting against the main body 1 (against the contact surface 3), preventing the risk of the closure element 8.1 from losing its position, for example. Preferably, furthermore, in the event that a recess 3.0 does not span the entire perimeter around the central axis 100.1, the contact surface 3 can comprise a plurality of recesses 3.0 distributed in the same transverse plane, as depicted in the example of Figure 6, which facilitates the evacuation of gas as a plurality of paths for the evacuation thereof (one per recess 3.0) have been enabled, without negatively affecting the stability of the piston 2 and of the closure element 8.1. In said Figure 6 three recesses 3.0 are depicted in the same transverse plane, but the contact surface 3 might have a different number of recesses 3.0.

When the contact surface 3 comprises a plurality of recesses 3.0 distributed in the same transverse plane, said recesses 3.0 can be distributed uniformly around the central axis 100.1 of the cylinder 100. This would allow the gaseous fluid to be evacuated in a uniform manner around said central axis 100.1, preventing some parts of the cylinder 100 from being more affected than others and thus preventing unnecessary deteriorations of said cylinder 100 for this reason.

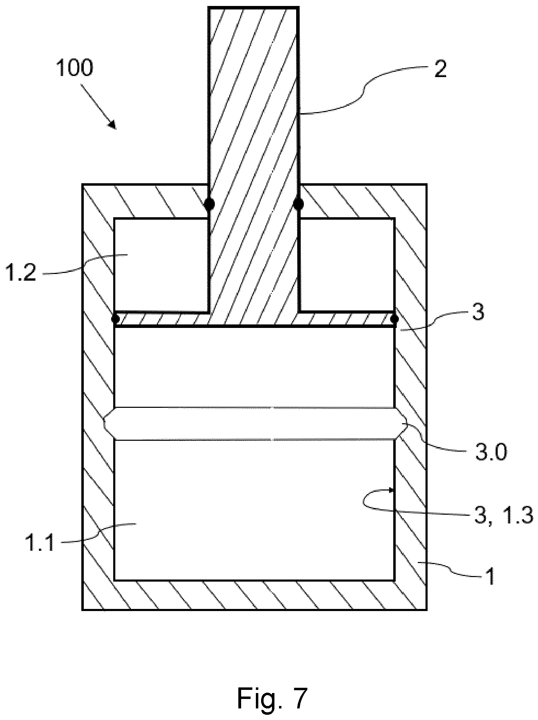

In other embodiments not according to the invention, such as in the one shown by way of example in Figure 7, the recess 3.0 could be circular, i.e., it could span the entire perimeter around the central axis 100.1, and would have in this case the central axis 100.1 of the cylinder 100 as the center. This would allow the area through which the gaseous fluid can be evacuated from the gas chamber 1.1 to be increased, which would facilitate the limitation of the force of the cylinder 100 against the movement of the actuation element which pushes the piston 2 in the first longitudinal direction 1L, without needing to increase in excess the axial length 3W of the recess 3.0. However, in the position of the piston 2 in which this passage for the gas is enabled, the base 2.0 of said piston 2 would not rest against the main body 1 and it runs the risk of the closure element 8.1 becoming detached from the base 2.0 and/or of the piston 2 becoming unstable.

Generally speaking, making recesses 3.0 on the contact surface 3 can lead to weakening the cylinder 100, or requiring a larger thickness in the element comprising said contact surface 3, while both of such situations are eliminated or reduced by making recesses 3.0 not spanning the entire perimeter around the central axis 100.1. Minimizing the axial length 3W of the recess 3.0 could also contribute to this reduction or elimination.

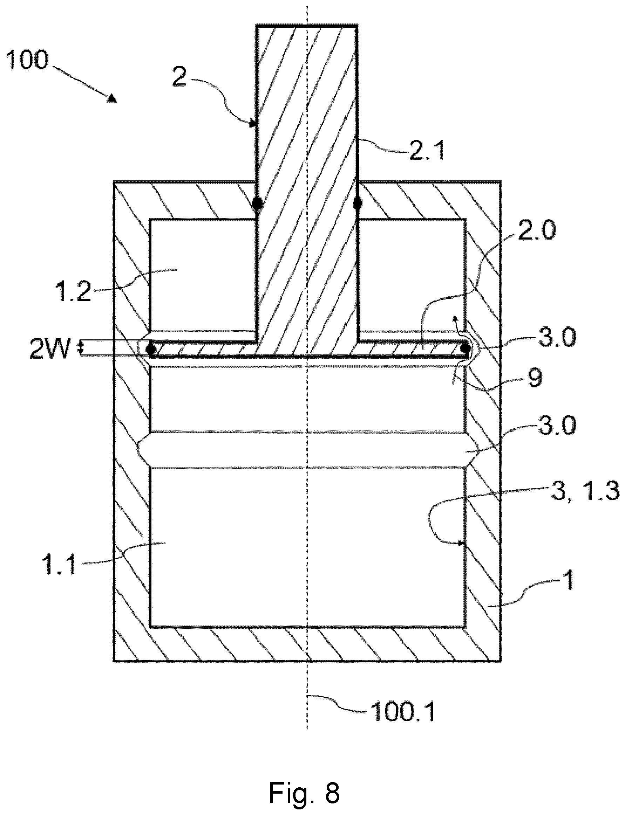

The contact surface 3 of the cylinder 100 can further comprise a plurality of recesses 3.0 distributed axially with respect to the central axis 100.1 of the cylinder 100, both when a recess 3.0 does not span the entire perimeter angular (see the embodiment of Figures 3 to 5) and when it does (see the embodiment not according to the invention of Figure 8). That is, the contact surface 3 can comprise recesses 3.0 at different heights with respect to a lower base 1.0 of the main body 1 (or in different transverse planes).

Furthermore, as described above, in each transverse plane the contact surface 3 may comprise a plurality of recesses 3.0, in the case of recesses 3.0 that do not span the entire perimeter around the central axis 100.1 of the cylinder 100. Therefore, if the piston 2 continues to move in the first longitudinal direction 1L after the first recess 3.0 and the contact zone 2.91 coincide and after a path for the passage of the gaseous fluid is closed, during said movement said contact zone 2.91 will coincide with a new recess 3.0 (the one located in the lowest position), with a new path for the passage of gaseous fluid opening up and the increase in force offered by the cylinder 100 against said movement of the piston 2 being impeded despite said movement additional of said piston 2. The arrangement of the recesses 3.0 at different heights is previously selected based on the force requirements of the manufacturer of the cylinder 100 and/or of the end customer of said cylinder 100.

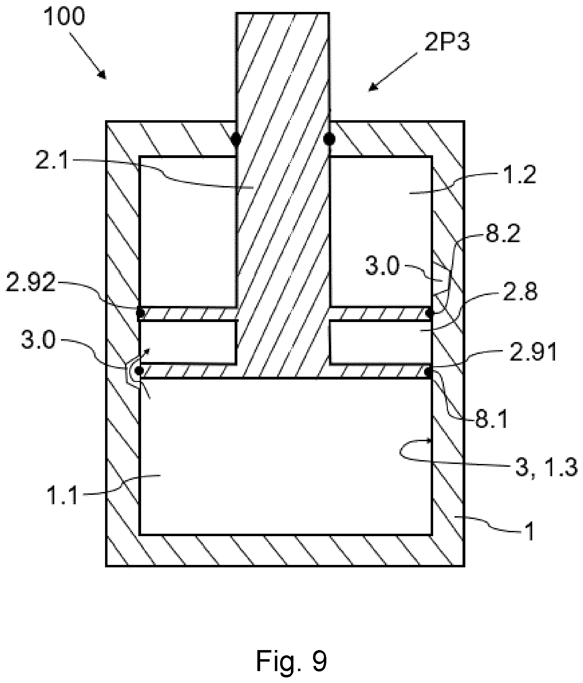

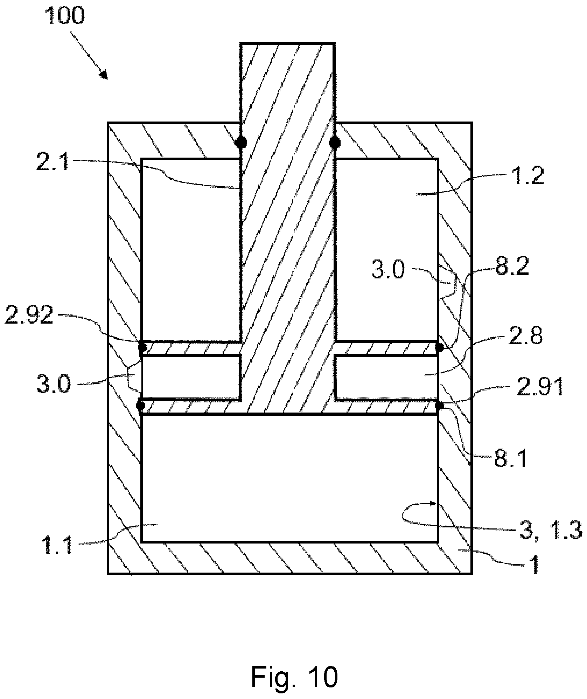

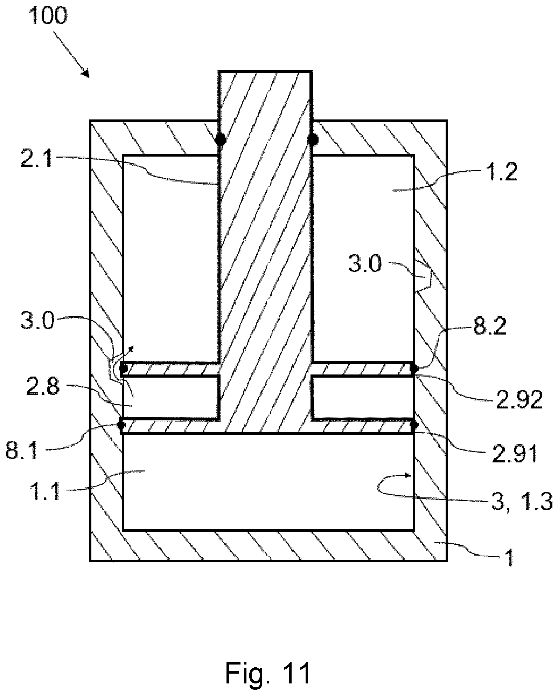

In some embodiments, such as the one shown in Figures 9 to 11, the piston 2 comprises two contact zones 2.91 and 2.92 axially separated from one another (in other embodiments it could have more contact zones), an auxiliary chamber 2.8 being defined between both contact zones 2.91 and 2.92 (within the cylindrical inner cavity defined in the main body 1). In these embodiments, the contact surface 3 preferably comprises recesses 3.0 at different heights with respect to the lower base 1.0 of the main body 1 of the cylinder 100. Each contact zone 2.91 and 2.92 comprises an associated closure element 8.1 and 8.2, with the function previously described. The closure element 8.2 can be, for example, an O-ring (like closure element 8.1). In the case of there being a plurality of axially distributed recesses 3.0, the axial distance between two contiguous recesses 3.0 of the contact surface 3 of the cylinder 100 is other than the axial distance between the two contact zones 2.91 and 2.92 of the piston 2 (other than the distance between the two sealing elements 8.1 and 8.2), preferably being greater than same, such that both contact zones 2.91 and 2.92 do not simultaneously coincide with two recesses 3.0, so that two paths for the passage of gaseous fluids do not open up simultaneously. When a path for the passage opens up between the contact zone 2.91 arranged in the lowest position and the contact surface 3, this allows the gaseous fluid that is evacuated from the gas chamber 1.1 to be stored in the auxiliary chamber 2.8 (Figure 9). If the piston 2 continues to descend, the first contact zone 2.91 stops coinciding with the recess 3.0 and the fluid continues to be stored in the auxiliary chamber 2.8 (Figure 10), until the second contact zone 2.92 coincides with a recess 3.0. With the piston 2 in this position, the closure element 8.2 does not cooperate with the contact surface, and a path for the passage of gas which is evacuated from the auxiliary chamber 2.8 to the additional chamber 1.2 therefore opens up (Figure 11).

The presence of two contact zones 2.91 and 2.92 such as those described allows having the base 2.0 of the piston 2 cooperating with the contact surface 3 at all times (with the first contact zone 2.91, with the second contact zone 2.92, or with both contact zones 2.91 and 2.92), which allows a movement of the piston 2 as if there were no recesses 3.0 on the contact surface 3. During the downward movement of the piston 2, it always exerts a force dependent on the base 2.0 as the gas passes from the gas chamber 1.1 to the auxiliary chamber 2.8 instead of directly to the gas chamber 1.1, so the cylinder 100 does not decrease the value of its force when the passage of gas from the gas chamber 1.1 opens up.

In some embodiments in which the piston 2 comprises a plurality of contact zones 2.91 and 2.92, the contact surface 3 can comprise recesses 3.0 at different heights with respect to the lower base 1.0 of the main body 1. These recesses 3.0 may or may not span the entire perimeter around the central axis 100.1 of said cylinder 100.

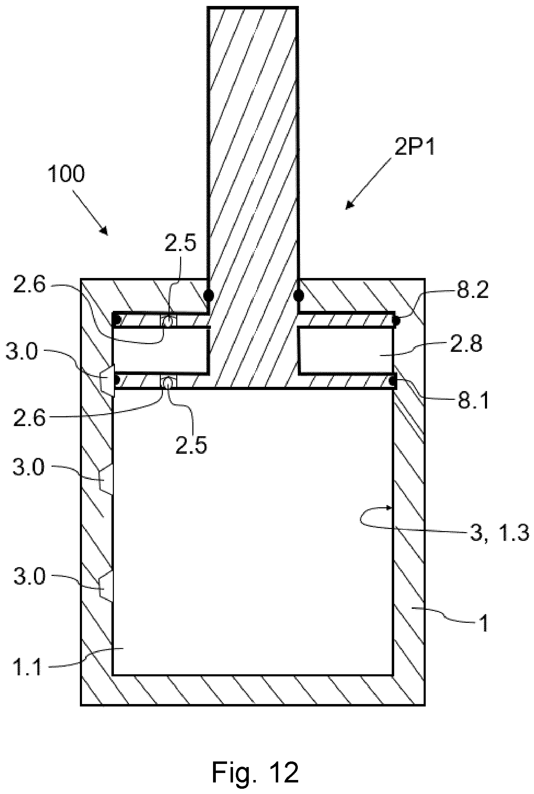

In some embodiments in which the piston 2 comprises a plurality of contact zones 2.91 and 2.92, the contact surface 3 preferably comprises a recess 3.0 arranged such that, with the piston 2 in the rest position 2P1, the contact zone 2.91 that is closest to the lower base 1.0 of the main body 1 (the contact zone 2.91 which his in the lowest position) coincides with said recess 3.0, as shown in the embodiment depicted in Figure 12. In this case, the contact surface 3 comprises a plurality of recesses 3.0 at different heights with respect to the lower base 1.0, and said recess 3.0 is the recess 3.0 farthest away from said lower base 1.0.

In some embodiments, such as in the ones shown in Figures 2 to 12, the contact surface 3 is the inner surface 1.3 of the main body 1 delimiting the cylindrical inner cavity. In this manner, machining the recesses 3.0 (or the recess 3.0) in said inner surface 1.3 is enough to obtain the described advantages.

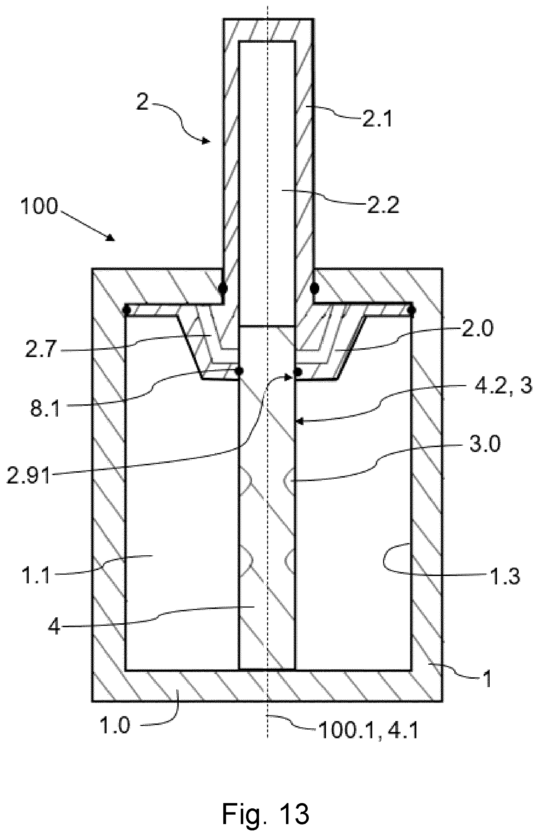

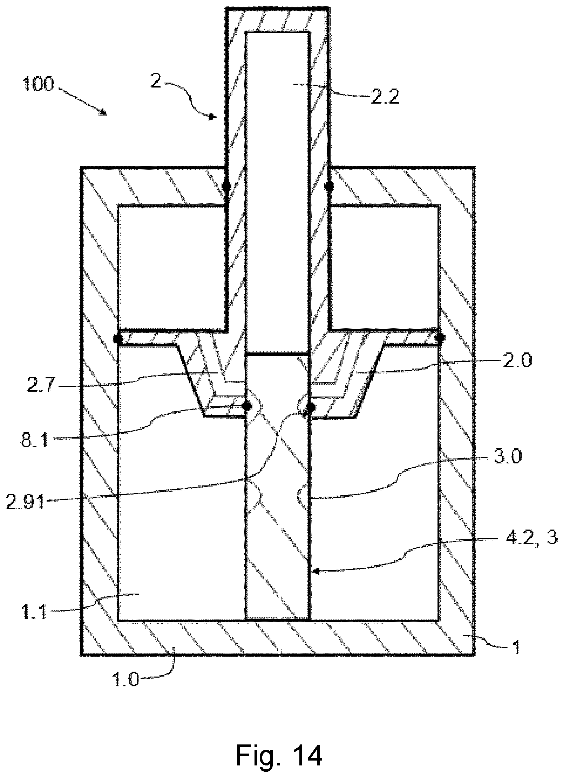

In other embodiments, such as in the one shown in Figures 13 and 14, the cylinder 100 comprises a longitudinal rod 4 attached to the lower base 1.0 of the main body 1 and comprises a longitudinal axis 4.1 parallel to the central axis 100.1 of the cylinder 100, or coinciding with said central axis 100.1, and an outer surface 4.2. Said outer surface 4.2 is the contact surface 3 of said cylinder 100. Thus, the recess 3.0 (or recesses 3.0) is in said outer surface 4.2, preferably facing the inner surface 1.3 of the main body 1 of the cylinder 100.

Having a contact surface 3 in an additional part (the longitudinal rod 4) allows the machining of the inner surface 1.3 of the main body 1 in order to obtain the recesses 3.0 to be dispensed with, and that is particularly advantageous for those cylinders 100 in which said inner surface 1.3 cannot be readily accessed. The recesses 3.0 (or recess 3.0) of the longitudinal rod 4 can be made before attaching the longitudinal rod 4 to the main body 1 of the cylinder, so manufacturing a cylinder 100 in that way is simple, even if it requires at least one additional element (the longitudinal rod 4) to be used.

In these embodiments, the piston 2 can comprise a housing 2.2 open at its front part, for at least partially housing the longitudinal rod 4. The presence of the longitudinal rod 4 therefore does not affect the movement of the piston 2. Preferably, the longitudinal rod 4 is partially housed in the housing 2.2 of the piston 2 when said piston 2 is in the rest position 2P1, such that it is ensured that the piston 2 does not collide with said longitudinal rod 4 when it starts to move in the first longitudinal direction 1L from the rest position 2P1.

The piston 2 can comprise a through hole 2.7 communicating the housing 2.2 with the additional chamber 1.2, such that when the region of actuation 2.91 coincides with a recess 3.0, the gaseous fluid that is evacuated from the gas chamber 1.1 through said recess 3.0 reaches said additional chamber 1.2 through said through hole 2.7. This ensures the evacuation of said gaseous fluid from said gas chamber 1.1 in a simple manner. Said through hole 2.7 is preferably at the base 2.0 of the piston 2, as shown in Figures 13 and 14, although it could also be in the main rod 2.1.

In other embodiments not depicted in the figures, in which the cylinder 100 comprises a longitudinal rod 4 such as the one described, the piston 2 comprises two contact zones 2.91 and 2.92 and an auxiliary chamber 2.8 between both contact zones 2.91 and 2.92, with the through hole 2.7 being associated with the contact zone 2.91 or 2.92 farthest away from the gas chamber 1.1 and configured for communicating the auxiliary chamber 2.8 with the additional chamber 1.2. The other contact zone 2.91 or 2.92 will also have an axial length 2W less than the axial length 3W of the recess 3.0, as described above, to allow the gas that is evacuated from the gas chamber 1.1 to reach the auxiliary chamber 2.8. The above-described advantages of having an auxiliary chamber 2.8 are also obtained in these embodiments.

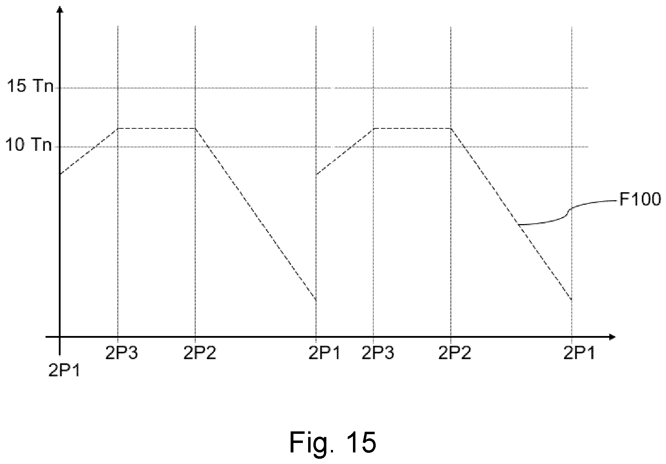

In any of the embodiments of the cylinder 100, the piston 2 can comprise, as shown in the embodiments of Figures 2 to 4, at least one path 2.6 communicating the gas chamber 1.1 with the additional chamber 1.2, the cylinder 100 comprising a blocking element 2.5 housed in said path 2.6 and configured for enabling the passage of fluid through said path 2.6 only from the additional chamber 1.2 to the gas chamber 1.1. The upward movement of the piston 2 to its rest position 2P1 is thereby facilitated once the actuation element (the die of a press, for example) stops acting on said piston 2. In particular, during the retreat of the piston 2, it causes the cylinder to offer a force due to the diameter of the rod 2.1 of the piston 2 and not the base 2.0 as occurs when the piston 2 descends, so during the retreat the force F100 exerted by the cylinder 100 drops with respect to the force exerted when the piston 2 descends, as depicted in Figure 15. Once the piston 2 retreats to the rest position 2P1, when it starts to lower again, the force depends on the diameter of the base 2.0 again, so the cylinder 100 starts exerting a higher force F100 than the one it exerted when the piston 2 reached the rest position 2P1.

In the embodiments comprising two actuation regions 2.91 and 2.92, the cylinder can comprise a path 2.6 and a blocking element 2.5 associated with each contact zone 2.91 and 2.92, as shown in Figure 12, although it may comprise a single path communicating the gas chamber 1.1 with the additional chamber 1.2. The path 2.6 of a contact zone 2.01 serves to communicate the gas chamber 1.1 with the auxiliary chamber 2.8, the other path 2.6 serves to communicate said auxiliary chamber 2.8 with the additional chamber 1.2. Each blocking element 2.5 is configured for allowing the communication of gas from the upper chamber to the lower chamber (from the auxiliary chamber 2.8 to the gas chamber 1.1 in one case, and from the additional chamber 1.2 to the auxiliary chamber 2.8 in the other case).

## Claims

1. Gas stamping cylinder configured for stamping presses, the cylinder (100) comprising a central axis (100.1), a main body (1) defining a cylindrical inner cavity, and a piston (2) suitable for moving in the inner cavity in a first longitudinal direction (1L) and a second longitudinal direction (2L) opposite the first longitudinal direction (1L), between a rest position (2P1) and a compression position (2P2), the piston (2) comprising a base (2.0) and a main rod (2.1) extending axially from the base (2.0) and said main rod (2.1) comprising an end protruding from the main body (1) of the cylinder (100) at least with the piston (2) in the rest position (2P1), the cylinder (100) comprising, in the cylindrical inner cavity defined in the main body (1), a gas chamber (1.1) with a gaseous fluid therein below the base (2.0) of the piston (2) and an additional chamber (1.2) above said base (2.0), and the piston (2) comprising at least one contact zone (2.91) configured for sliding over a contact surface (3) of the cylinder (100) during its movement, and the cylinder (100) comprising a closure element (8.1) arranged in said contact zone (2.91) and configured for cooperating with the contact surface (3) during the movement of the piston (2) and impeding, with said cooperation, the passage of gaseous fluid from the gas chamber (1.1) between said contact zone (2.91) of the piston (2) and said contact surface (3), the contact surface (3) comprising at least one recess (3.0) below the piston (2), with said piston (2) in the rest position (2P1), such that when the contact zone (2.91) of the piston (2) coincides during its movement with said recess (3.0), the closure element (8.1) at least partially stops cooperating with said contact surface (3) with said contact zone (2.91) of the piston (2) in said position, and a path for the evacuation of the gaseous fluid from the gas chamber (1) is opened between said contact zone (2.9) and said contact surface (3), **characterized in that** the recess (3.0) does not span the entire perimeter of the main body (1) around the central axis (100.1) of the cylinder (100).

2. Gas stamping cylinder according to claim 1, wherein the recess (3.0) comprises an axial length (3W) greater than an axial length (2W) of the contact zone (2.91) of the piston (2).

3. Gas stamping cylinder according to claim 1 or 2, wherein the contact surface (3) comprises a plurality of recesses (3.0) in one and the same transverse plane.

4. Gas stamping cylinder according to claim 3, wherein the plurality of recesses (3.0) in one and the same transverse plane are distributed uniformly around the central axis (100.1).

5. Gas stamping cylinder according to any of claims 1 to 4, wherein the contact surface (3) comprises a plurality of recesses (3.0) distributed axially with respect to the central axis (100.1) of the cylinder (100).

6. Gas stamping cylinder according to claim 5, wherein the piston (2) comprises at least two contact zones (2.91, 2.92) axially separated from one another, and each contact zone (2.91, 2.92) comprises an associated closure element (8.1, 8.2), the cylinder (100) comprising an auxiliary chamber (2.8) inside the main body (1) between both contact zones (2.91, 2.92).

7. Gas stamping cylinder according to claim 6, wherein the axial distance between two contiguous recesses (3.0) of the contact surface (3) of the cylinder (100) is other than the axial distance between the two contact zones (2.91, 2.92) of the piston (2), preferably being greater than same.

8. Gas stamping cylinder according to claim 6 or 7, wherein the contact surface (3) comprises a recess (3.0) arranged such that, with the piston (2) in the rest position (2P1), the contact zone (2.91) that is closest to the gas chamber (1.1) coincides with said recess (3.0).

9. Gas stamping cylinder according to any of claims 1 to 8, wherein the contact surface (3) is an inner surface (1.3) of the main body (1) delimiting the cylindrical inner cavity.

10. Gas stamping cylinder according to any of claims 1 to 8, comprising a longitudinal rod (4) attached to a lower base (1.0) of the main body (1) and comprising a longitudinal axis (4.1) parallel to the central axis (100.1) of the cylinder (100), or coinciding with said central axis (100.1), and an outer surface (4.2), said outer surface (4.2) being the contact surface (3) of said cylinder (100).

11. Gas stamping cylinder according to claim 9 or 10, wherein the piston (2) comprises a through hole (2.7) communicating the housing (2.2) of said piston (2) with the additional chamber (1.2).

12. Gas stamping cylinder according to claim 11, wherein the through hole (2.7) is at the base (2.0) of the piston (2).

13. Gas stamping cylinder according to any of claims 10 to 12, wherein the recess (3.0) is facing the surface of the main body (1) of the cylinder (100) delimiting the cylindrical inner cavity.

14. Gas stamping cylinder according to any of claims 1 to 13, wherein the contact zone (2.91, 2.92) is at the base (2.0) of the piston (2).

15. Gas stamping cylinder according to any of claims 1 to 14, wherein the piston (2) comprises a path (2.6) communicating the gas chamber (1.1) with the additional chamber (1.2), the cylinder (100) comprising a blocking element (2.5) housed in said path (2.6) and configured for enabling the passage of fluid through said path (2.6) only from the additional chamber (1.2) to the gas chamber (1.1).

## Patentansprüche

1. Gasprägezylinder, der für Prägepressen konfiguriert ist, wobei der Zylinder (100) eine zentrale Achse (100.1), einen Hauptkörper (1), der einen zylindrischen Innenhohlraum definiert, und einen Kolben (2) umfasst, der geeignet ist, sich in dem Innenhohlraum in einer ersten Längsrichtung (1L) und einer zweiten Längsrichtung (2L) entgegengesetzt zur ersten Längsrichtung (1L) zwischen einer Ruheposition (2P1) und einer Druckposition (2P2) zu bewegen, wobei der Kolben (2) eine Basis (2.0) und eine Hauptstange (2.1) umfasst, die sich axial von der Basis (2.0) erstreckt, und wobei die Hauptstange (2.1) ein Ende umfasst, das aus dem Hauptkörper (1) des Zylinders (100) mindestens mit dem Kolben (2) in der Ruheposition (2P1) herausragt, wobei der Zylinder (100) in dem im Hauptkörper (1) definierten zylindrischen Innenhohlraum eine Gaskammer (1.1) mit einem gasförmigen Fluid darin unterhalb der Basis (2.0) des Kolbens (2) und eine zusätzliche Kammer (1.2) oberhalb der Basis (2.0) umfasst, und wobei der Kolben (2) mindestens eine Kontaktzone (2.91) umfasst, die dazu konfiguriert ist, während seiner Bewegung über eine Kontaktoberfläche (3) des Zylinders (100) zu gleiten, und wobei der Zylinder (100) ein Verschlusselement (8.1) umfasst, das in der Kontaktzone (2.91) angeordnet ist und dazu konfiguriert ist, während der Bewegung des Kolbens (2) mit der Kontaktoberfläche (3) zusammenzuwirken und durch dieses Zusammenwirken den Durchgang von gasförmigem Fluid aus der Gaskammer (1.1) zwischen der Kontaktzone (2.91) des Kolbens (2) und der Kontaktoberfläche (3) zu verhindern, wobei die Kontaktoberfläche (3) mindestens eine Aussparung (3.0) unterhalb des Kolbens (2) umfasst, wenn sich der Kolben (2) in der Ruheposition (2P1) befindet, so dass, wenn die Kontaktzone (2.91) des Kolbens (2) während seiner Bewegung mit der Aussparung (3.0) übereinstimmt, das Verschlusselement (8.1) mindestens teilweise stoppt, mit der Kontaktoberfläche (3) mit der Kontaktzone (2.91) des Kolbens (2) in dieser Position zusammenzuwirken, und ein Pfad für die Evakuierung des gasförmigen Fluids aus der Gaskammer (1) zwischen der Kontaktzone (2.9) und der Kontaktoberfläche (3) geöffnet wird, **dadurch gekennzeichnet, dass** die Aussparung (3.0) nicht den gesamten Umfang des Hauptkörpers (1) um die zentrale Achse (100.1) des Zylinders (100) herum überspannt.

2. Gasprägezylinder nach Anspruch 1, wobei die Aussparung (3.0) eine axiale Länge (3W) umfasst, die größer ist als eine axiale Länge (2W) der Kontaktzone (2.91) des Kolbens (2).

3. Gasprägezylinder nach Anspruch 1 oder 2, wobei die Kontaktoberfläche (3) eine Vielzahl von Aussparungen (3.0) in ein und derselben Querebene umfasst.

4. Gasprägezylinder nach Anspruch 3, wobei die Vielzahl der Aussparungen (3.0) in ein und derselben Querebene gleichmäßig um die zentrale Achse (100.1) verteilt sind.

5. Gasprägezylinder nach einem der Ansprüche 1 bis 4, wobei die Kontaktoberfläche (3) eine Vielzahl von Aussparungen (3.0) umfasst, die axial in Bezug auf die zentrale Achse (100.1) des Zylinders (100) verteilt sind.

6. Gasprägezylinder nach Anspruch 5, wobei der Kolben (2) mindestens zwei axial voneinander getrennte Kontaktzonen (2.91, 2.92) umfasst und jede Kontaktzone (2.91, 2.92) ein zugeordnetes Verschlusselement (8.1, 8.2) umfasst, wobei der Zylinder (100) eine Hilfskammer (2.8) innerhalb des Hauptkörpers (1) zwischen beiden Kontaktzonen (2.91, 2.92) umfasst.

7. Gasprägezylinder nach Anspruch 6, wobei die axiale Entfernung zwischen zwei benachbarten Aussparungen (3.0) der Kontaktoberfläche (3) des Zylinders (100) sich von der axialen Entfernung zwischen den beiden Kontaktzonen (2.91, 2.92) des Kolbens (2) unterscheidet, wobei sie vorzugsweise größer ist als diese.

8. Gasprägezylinder nach Anspruch 6 oder 7, wobei die Kontaktoberfläche (3) eine Aussparung (3.0) umfasst, die derart angeordnet ist, dass bei sich in der Ruhestellung (2P1) befindlichem Kolben (2) die der Gaskammer (1.1) am nächsten liegende Kontaktzone (2.91) mit der Aussparung (3.0) übereinstimmt.

9. Gasprägezylinder nach einem der Ansprüche 1 bis 8, wobei die Kontaktoberfläche (3) eine Innenoberfläche (1.3) des Hauptkörpers (1) ist, die den zylindrischen Innenhohlraum begrenzt.

10. Gasprägezylinder nach einem der Ansprüche 1 bis 8, umfassend eine Längsstange (4), die an einer unteren Basis (1.0) des Hauptkörpers (1) angebracht ist und eine Längsachse (4.1) aufweist, die parallel zur zentralen Achse (100.1) des Zylinders (100) verläuft oder mit dieser zentralen Achse (100.1) zusammenfällt, und eine Außenoberfläche (4.2), wobei die Außenoberfläche (4.2) die Kontaktoberfläche (3) des Zylinders (100) ist.

11. Gasprägezylinder nach Anspruch 9 oder 10, wobei der Kolben (2) ein Durchgangsloch (2.7) umfasst, das das Gehäuse (2.2) des Kolbens (2) mit der zusätzlichen Kammer (1.2) verbindet.

12. Gasprägezylinder nach Anspruch 11, wobei sich das Durchgangsloch (2.7) an der Basis (2.0) des Kolbens (2) befindet.

13. Gasprägezylinder nach einem der Ansprüche 10 bis 12, wobei die Aussparung (3.0) zur Oberfläche des Hauptkörpers (1) des Zylinders (100) zugewendet ist, der den zylindrischen Innenhohlraum begrenzt.

14. Gasprägezylinder nach einem der Ansprüche 1 bis 13, wobei sich die Kontaktzone (2.91, 2.92) an der Basis (2.0) des Kolbens (2) befindet.

15. Gasprägezylinder nach einem der Ansprüche 1 bis 14, wobei der Kolben (2) einen Pfad (2.6) umfasst, der die Gaskammer (1.1) mit der zusätzlichen Kammer (1.2) verbindet, wobei der Zylinder (100) ein Sperrelement (2.5) umfasst, das in dem Pfad (2.6) aufgenommen und dazu konfiguriert ist, den Durchfluss von Fluid durch den Pfad (2.6) nur von der zusätzlichen Kammer (1.2) zur Gaskammer (1.1) zu ermöglichen.

## Revendications

1. Cylindre d'estampage à gaz configuré pour des presses à estamper, le cylindre (100) comprenant un axe central (100.1), un corps principal (1) définissant une cavité interne cylindrique, et un piston (2) approprié pour se déplacer dans la cavité interne dans une première direction longitudinale (1L) et une deuxième direction longitudinale (2L) opposée à la première direction longitudinale (1L), entre une position de repos (2P1) et une position de compression (2P2), le piston (2) comprenant une base (2.0) et une tige principale (2.1) s'étendant axialement à partir de la base (2.0) et ladite tige principale (2.1) comprenant une extrémité faisant saillie du corps principal (1) du cylindre (100) au moins avec le piston (2) dans la position de repos (2P1), le cylindre (100) comprenant, dans la cavité interne cylindrique définie dans le corps principal (1), une chambre à gaz (1.1) avec un fluide gazeux dans celle-ci en dessous de la base (2.0) du piston (2) et une chambre additionnelle (1.2) au-dessus de ladite base (2.0), et le piston (2) comprenant au moins une zone de contact (2.91) configurée pour glisser sur une surface de contact (3) du cylindre (100) pendant son déplacement, et le cylindre (100) comprenant un élément de fermeture (8.1) disposé dans ladite zone de contact (2.91) et configuré pour coopérer avec la surface de contact (3) pendant le déplacement du piston (2) et empêcher, avec ladite coopération, le passage de fluide gazeux à partir de la chambre à gaz (1.1) entre ladite zone de contact (2.91) du piston (2) et ladite surface de contact (3), la surface de contact (3) comprenant au moins un évidement (3.0) en dessous du piston (2), avec ledit piston (2) dans la position de repos (2P1), de telle sorte que, lorsque la zone de contact (2.91) du piston (2) coïncide pendant son déplacement avec ledit évidement (3.0), l'élément de fermeture (8.1) cesse au moins partiellement de coopérer avec ladite surface de contact (3) avec ladite zone de contact (2.91) du piston (2) dans ladite position, et un trajet pour l'évacuation du fluide gazeux à partir de la chambre à gaz (1) est ouvert entre ladite zone de contact (2.9) et ladite surface de contact (3), **caractérisé en ce que** l'évidement (3.0) ne couvre pas tout le périmètre du corps principal (1) autour de l'axe central (100.1) du cylindre (100).

2. Cylindre d'estampage à gaz selon la revendication 1, dans lequel l'évidement (3.0) comprend une longueur axiale (3W) supérieure à une longueur axiale (2W) de la zone de contact (2.91) du piston (2).

3. Cylindre d'estampage à gaz selon la revendication 1 ou 2, dans lequel la surface de contact (3) comprend une pluralité d'évidements (3.0) dans un même plan transversal.

4. Cylindre d'estampage à gaz selon la revendication 3, dans lequel la pluralité de évidements (3.0) dans un même plan transversal sont répartis uniformément autour de l'axe central (100.1).

5. Cylindre d'estampage à gaz selon l'une quelconque des revendications 1 à 4, dans lequel la surface de contact (3) comprend une pluralité d'évidements (3.0) répartis axialement par rapport à l'axe central (100.1) du cylindre (100).

6. Cylindre d'estampage à gaz selon la revendication 5, dans lequel le piston (2) comprend au moins deux zones de contact (2.91, 2.92) axialement séparées l'une de l'autre, et chaque zone de contact (2.91, 2.92) comprend un élément de fermeture (8.1, 8.2) associé, le cylindre (100) comprenant une chambre auxiliaire (2.8) à l'intérieur du corps principal (1) entre les deux zones de contact (2.91, 2.92).

7. Cylindre d'estampage à gaz selon la revendication 6, dans lequel la distance axiale entre deux évidements (3.0) contigus de la surface de contact (3) du cylindre (100) est différente de la distance axiale entre les deux zones de contact (2.91, 2.92) du piston (2), de préférence étant supérieure à celle-ci.

8. Cylindre d'estampage à gaz selon la revendication 6 ou 7, dans lequel la surface de contact (3) comprend un évidement (3.0) disposé de telle sorte que, avec le piston (2) dans la position de repos (2P1), la zone de contact (2.91) qui est la plus proche de la chambre à gaz (1.1) coïncide avec ledit évidement (3.0).

9. Cylindre d'estampage à gaz selon l'une quelconque des revendications 1 à 8, dans lequel la surface de contact (3) est une surface interne (1.3) du corps principal (1) délimitant la cavité interne cylindrique.

10. Cylindre d'estampage à gaz selon l'une quelconque des revendications 1 à 8, comprenant une tige longitudinale (4) attachée à une base inférieure (1.0) du corps principal (1) et comprenant un axe longitudinal (4.1) parallèle à l'axe central (100.1) du cylindre (100), ou coïncidant avec ledit axe central (100.1), et une surface externe (4.2), ladite surface externe (4.2) étant la surface de contact (3) dudit cylindre (100).

11. Cylindre d'estampage à gaz selon la revendication 9 ou 10, dans lequel le piston (2) comprend un trou traversant (2.7) mettant en communication le logement (2.2) dudit piston (2) avec la chambre additionnelle (1.2).

12. Cylindre d'estampage à gaz selon la revendication 11, dans lequel le trou traversant (2.7) se trouve dans la base (2.0) du piston (2).

13. Cylindre d'estampage à gaz selon l'une quelconque des revendications 10 à 12, dans lequel l'évidement (3.0) fait face à la surface du corps principal (1) du cylindre (100) délimitant la cavité interne cylindrique.

14. Cylindre d'estampage à gaz selon l'une quelconque des revendications 1 à 13, dans lequel la zone de contact (2.91, 2.92) se trouve dans la base (2.0) du piston (2).

15. Cylindre d'estampage à gaz selon l'une quelconque des revendications 1 à 14, dans lequel le piston (2) comprend un trajet (2.6) mettant en communication la chambre à gaz (1.1) avec la chambre additionnelle (1.2), le cylindre (100) comprenant un élément de blocage (2.5) logé dans ledit trajet (2.6) et configuré pour permettre le passage de fluide à travers ledit trajet (2.6) uniquement de la chambre additionnelle (1.2) vers la chambre à gaz (1.1).
